# EUROPÄISCHE PATENTSCHRIFT

(11) **EP 1 186 826 B1**
(45) Veröffentlichungstag und Bekanntmachung des Hinweises auf die Patenterteilung: **29.12.2004**
(21) Anmeldenummer: 01121207.3
(22) Anmeldetag: 05.09.2001
(51) Int. Cl.: F16N 7/38, B65G 45/08

(54) **Schmiereinrichtung zum Abschmieren wandernder Schmierstellen**
Lubricator for lubricating moving points
Lubrificateur pour lubrification de points mobiles

(30) Priorität: 12.09.2000 DE 20015780 U
(43) Veröffentlichungstag der Anmeldung: 13.03.2002
(60) Teilanmeldung: 03013204.7
(73) Patentinhaber: Lincoln GmbH & Co. KG, 69190 Walldorf (DE)
(72) Erfinder: Rodemer, Karl, 69126 Heidelberg (DE); Rühl, Heinz, 76646 Bruchsal (DE)
(74) Vertreter: KEIL & SCHAAFHAUSEN

(56) Entgegenhaltungen:
- WO-A-94/09308
- FR-A- 2 700 200

## Beschreibung

Die Erfindung bezieht sich auf eine Schmiereinrichtung zum Abschmieren wandernder Schmierstellen, wie solchen an einem Band, insbesondere einem Rollen- oder Kettenband, welches ein in Längsrichtung der Schmierstellenbewegung hin und her verschieblich gelagertes Schmiergerät aufweist, welches einen relativ zu dem Band oder dgl. die Schmierstellen aufweisenden Vorrichtung eine Ruhestellung und eine Mitnahmestellung einnehmenden Mitnehmer aufweist, wobei das Band oder dgl. den in Mitnahmestellung befindlichen Mitnehmer und damit das Schmiergerät über eine vorgegebene Laufstrecke in der Geschwindigkeit des Bandes oder dgl. mitnimmt, auf welcher ein Schmierkopf durch seitliche Relativbewegung zwischen Band oder dgl. und Schmiergerät an eine Schmierstelle heranbewegbar und dieser Schmierstoff zuführbar ist, wobei an dem Ende der Laufstrecke sowohl der Schmierkopf als auch der Mitnehmer re-lativ zu dem Band oder dgl. in die jeweilige Ruhestellung zurückgelangen und das Schmiergerät längs des Bandes oder dgl. in seine Ausgangsstellung zurückfahrbar ist.

Bei derartigen bekannten Schmiereinrichtungen treten Schwierigkeiten bei Schmierstellengeschwindigkeiten oberhalb eines vorgegebenen Grenzwertes, bspw. von 0,4 m/sec, auf, weil die dabei auftretenden großen Beschleunigungskräfte zu einem Versagen des Mitnehmers führen

Die WO 94 09 308 A bezieht sich auf eine Vorrichtung zum selbsttätigen Schmieren einer sich fortwährend bewegenden und mit Schmiernippeln versehenen Kette, mit einem zur Befestigung in der Nachbarschaft der Kette bestimmten Träger, einem Schmiermittelbehälter, einem auf dem Träger entlang der Kette bewegbaren Wagen, der wenigstens einen Schmiermitteleinspritzmechanismus mit einem Schmierkopf und einem Mittel zur Querverschiebung des Schmierkopfes, um diesen letzteren in Berührung mit einem Schmlemippel der Kette bei jedem Schmierarbeitsspiel zu bringen, trägt; einem Mittel zur Kupplung des bewegbaren Wagens mit der Kette, um den Wagen in Längsrichtung durch die Kette zu bewegen; und einem Mittel zur Rückstellung des Wagens in seine Ursprungsstellung, hat einmal der Schmierkopf Schmiermittel in den Schmier nippel eingespritzt. Um eine solche Vorrichtung hinsichtlich Anpassbarkeit an unterschiedliche Gegebenheiten, Einfachheit der Bauart und Überprüfbarkeit der Wartungsqualität zu verbessern, ist vorgesehen, dass das Kupplungsmittel einen mit dem bewegbaren Wagen fest verbundenen Antriebsarm umfasst, der einen Antriebskopf, einen um einen Querbolzen der Kette herum bewegbares Rad mit radialen Armen trägt, welches Rad am Anfang jedes Schmierarbeitsspiels gegen Drehung festgehalten wird, so dass der eine der Arme des Rades in Abstützberührung mit einem entsprechenden Bolzen der Kette ist, um das Positionieren und den Längsantrieb des Wagens bis zu einer Endhubstellung des Wagens zu gewährleisten, in welcher das Rad durch die Bewegung der Kette und die in dieser Stellung durch das Mittel auf den Wagen ausgeübte Rückstellkraft automatisch freigesetzt wird, wobei der Wagen in seine Ursprungsstellung am Anfang eines nachfolgenden Schmierarbeitsspieles zurückgeführt wird.

Aufgabe der vorliegenden Erfindung ist es, eine Schmiereinrichtung der eingangs genannten Art vorzuschlagen, welche auch bei verhältnismäßig großen Schmierstellengeschwindigkeiten eingesetzt werden kann.

Diese Aufgabe wird erfindungsgemäß bei einer Schmiereinrichtung der eingangs genannten Art bspw. dadurch gelöst, dass vor oder gleichzeitig mit dem Ineingriffbringen des Mitnehmers mit dem Band oder dgl. das Schmiergerät in Längsrichtung der Schmierstellenbewegung auf eine Anschubgeschwindigkeit anschiebbar ist, welche größer Null und kleiner als die Geschwindigkeit des Bandes oder dgl. ist. Auf diese Weise kann dafür Sorge getragen werden, dass die Geschwindigkeitsdifferenz zwischen den Schmierstellen und dem Schmiergerät vor dem Abschmiervorgang nicht größer ist als die Maximalgeschwindigkeit, unterhalb welcher ein Versagen des Mitnehmers nicht zu befürchten ist.

In der Praxis hat sich gezeigt, dass die Anschubgeschwindigkeit des Schmiergerätes nicht mehr als eine vorgegebene Maximaldifferenz, wie etwa 0,4 m/sec, geringer sein sollte als die Geschwindigkeit des Bandes oder dgl. Die Differenzgeschwindigkeit ist damit nicht größer als der zulässige Wert von 0,4 m/sec.

Vorzugsweise beträgt bei diesen Bedingungen die Anschubgeschwindigkeit des Schmiergerätes nicht mehr als ein vorgegebener Maximalwert, wie etwa 0,4 m/sec. Läuft dann das Band oder dgl. langsamer als das auf Anschubgeschwindigkeit beschleunigte Schmiergerät, bleibt dieses in Endstellung der Beschleunigungseinrichtung, bspw. eines Beschleunigungszylinders, stehen und wartet, bis es von dem Band oder dgl. in herkömmlicher Weise mitgenommen wird. Da die Schmierstellengeschwindigkeit in diesem Fall kleiner als etwa 0,4 m/sec ist, können keine Probleme mit dem Mitnehmer auftreten.

Bei einer besonderen Ausgestaltung der Erfindung erfolgt die Anschubbewegung des Schmiergerätes mittels einer Beschleunigungseinrichtung, wie eines Beschleunigungszylinders oder eines Stellmotors, ggf. gegen die Wirkung eines Rückfahrzylinders, um ein Abprallen des Mitnehmers von dem Band oder dgl. zu verhindern.

In weiterer Ausgestaltung der Erfindung ist die Anschubgeschwindigkeit des Schmiergerätes, ggf. mittels eines Drosselrückschlagventils, einstellbar, um die Schmiereinrichtung an die jeweiligen Bedingungen leicht anpassen zu können.

Der Beschleunigungszylinder wird vorzugsweise drucklos, sobald der Schmierkopf mit der Abgabe des Schmierstoffes beginnt. Nach Erreichen der vorgegebenen Anschubgeschwindigkeit von z.B. 0,4 m/sec wird das Schmiergerät in herkömmlicher Weise von dem Band oder dgl. unter der Wirkung des Mitnehmers mitgenommen und z. B. auf 0,8 m/sec beschleunigt.

Ein weiteres Erfindungsmerkmal kann darin bestehen, dass bei dem Zurückfahren des Schmiergerätes längs des Bandes oder dgl. in die Ausgangsstellung gleichzeitig der Beschleunigungszylinder drucklos in seine Ausgangslage fahrbar ist. Dann steht die Schmiereinrichtung für einen neuen Schmiereinsatz bereit.

Die Rückfahrgeschwindigkeit des Schmiergerätes kann dabei, ggf. mittels eines Drosselrückschlagventils an dem Rückfahrzylinder, einstellbar sein.

In der Praxis hat sich bewährt, dass der Gegendruck des Rückfahrzylinders während der Anschubbewegung des Schmiergerätes ca. 0,5 bar und der Rückfahrdruck des Rückfahrzylinders während der Zurückbewegung des Schmiergerätes längs des Bandes oder dgl. ca. 6 bar beträgt.

Ein weiterer Gedanke besteht darin, dass bei einer Schmiereinrichtung der eingangs genannten Art das den Schmierkopf aufweisende Schmiergerät zusammen mit dem Mitnehmer und vorzugsweise mit dessen Hilfe seitlich des Bandes oder dgl. senkrecht zu diesem verfahrbar ist. Es ist aber auch möglich, dass das Band oder dgl. vorzugsweise mit Hilfe des Mitnehmers, welcher gemeinsam mit dem Schmiergerät längs des Bandes oder dgl. verfahrbar ist, quer zur Längsrichtung der Schmierstellenbewegung in Richtung auf den Schmierkopf bewegbar ist. Ggf. mit Hilfe des Mitnehmers wird also der Schmierkopf an die Schmierstelle herangeführt, oder umgekehrt die zu schmierende Schmierstelle an den Schmierkopf, während dieser seitlich unverrückbar ist.

Der Mitnehmer kann bspw. einen Mitnehmerarm aufweisen, welcher, vorzugsweise von oben oder unten, in die Glieder eines Rollen- oder Kettenbandes eingreift. Dies kann insbesondere durch Einschwenken geschehen.

Der Mitnehmerarm hat dabei vorzugsweise an seinem äußeren Ende zum Übergreifen einer Rollen- oder Kettengliedachse eine gabelförmige Ausgestaltung.

Für den Fall von Störungen ist es zweckmäßig, dass der Mitnehmerarm in Bewegungsrichtung der Rollen- oder Kettengliedachse, welche von ihm bspw. übergriffen wird, aus dessen Bewegungsweg herausschwenkbar ist. Auf diese Weise wird bei weiterlaufendem Rollen- oder Kettenband der Mitnehmer zwangsläufig außer Funktion gesetzt.

Bekannte Schmiereinrichtungen dieser Art sind speziell an den jeweiligen Anwendungsfall angepasst. Eine schnelle und flexible Anpassung der Schmiervorrichtung an abgewandelte Rollen- oder Kettenbänder mit Schmierstellen in wechselndem Abstand zueinander ist nicht möglich. Außerdem lässt sich immer nur eine Schmierstelle in einem Abschmiertakt mit Schmierstoff versorgen, was insbesondere bei Kettenbändem mit Doppeltragrollenpaaren nachteilig ist. Um eine Schmiereinrichtung der eingangs genannten Art bereitzustellen, welche einfach an verschiedene Schmierstellenverteilungen oder Schmierstellenanzahlen anpassbar ist, können zwei in Laufrichtung des Bandes oder dgl. im Abstand zueinander angeordnete Sensoren vorgesehen sind, deren Signal für die Erkennung von zwei in Längsrichtung des Bandes oder dgl. im Abstand zueinander angeordneten Schmierstellen herangezogen werden, wobei für die Versorgung von beiden Schmierstellen wenigstens zwei in deren Abstand angeordnete Schmierköpfe vorgesehen sind. Diese Lösung ist mit dem Vorteil verknüpft, dass z. B. sowohl Rollen- oder Kettenbänder mit ungleichförmig verteilt angeordneten Schmierstellen, als auch Rollen- oder Kettenbänder mit wechselnder Schmierstellenanzahl und/oder -abstand und sowohl mit Einzeltragrollenpaaren als auch mit Doppeltragrollenpaaren automatisch abschmierbar sind.

Es ist vorteilhaft, wenn der Abstand der beiden Sensoren im Wesentlichen mit dem Abstand aufeinanderfolgender Schmierstellen des Bandes oder dgl. übereinstimmt, da dann die Signale der beiden Sensoren im Wesentlichen zeitgleich auftreten.

Ein weiteres Merkmal besteht darin, dass der Abstand der Sensoren voneinander einstellbar ist, um an unterschiedliche zu schmierende Bänder oder dgl. angepasst werden zu können. Entsprechendes gilt für den Schmierkopfabstand.

Bei einer Schmiereinrichtung der eingangs genannten Art können auch wenigstens zwei, bezogen auf das Band oder dgl. einander gegenüber liegende Schmierköpfe vorgesehen sein, welche jeweils von ihrer Seite aus in Richtung auf die Schmierstellen des Bandes oder dgl. synchron zu und ggf. auch von diesem weg bewegbar sind, so dass die aus dem Abschmierdruck auf das Schmiergerät und das Band oder dgl. resultierenden Belastungskräfte ausgeglichen werden.

Eine besonders zeitoptimierte Abschmierung wird dann bewirkt, wenn das Schmiergerät zwei Paare von Schmierköpfen aufweist, welche in Richtung auf die Schmierstellen des Bandes oder dgl. paarweise zu und von diesen weg steuerbar bewegbar sind. Eine solche Schmiereinrichtung eignet sich insbesondere für das Abschmieren von Bändern oder dgl. mit Doppeltragrollenpaaren.

Wenn die Schmierköpfe gemeinsam auf einem Schlitten angeordnet sind, laubt dies eine gemeinsame Beschleunigung der Schmierköpfe, bevor diese auf die Schmierstelle aufgesetzt werden; dieser Schlitten sollte dann auch den Mitnehmer tragen.

Ein weiteres Merkmal der Erfindung liegt darin, dass die Schmierkopfpaare im Wesentlichen spiegelbildlich zu dem zwischen ihnen befindlichen oder dgl. Band angeordnet sind.

Einzelheiten der Erfindung ergeben sich aus der nachfolgenden Beschreibung von Ausführungsbeispielen anhand der Zeichnung.

Es zeigen:
- Fig. 1: schematisch eine den Erfindungsgedanken aufweisende Schmiereinrichtung,
- Fig. 2A: ein Schmiergerät gemäß dem Erfindungsgedanken mit einem daran angebrachten Mitnehmer in Position zu einer Schmierstelle vor dem Eingriff des Mitnehmers in ein Kettenband,
- Fig. 2B: eine Darstellung entsprechend Fig. 2A, wobei der Mitnehmer in das Kettenband eingeschwenkt ist,
- Fig. 2C: eine Seitenansicht eines zu schmierenden Kettenbandes, wobei der Mitnehmer die Position aus Fig. 2B einnimmt,
- Fig. 2D: eine Darstellung entsprechend Fig. 2C, wobei der Mitnehmerarm des Mitnehmers in Bewegungsrichtung des Kettenbandes aus dem Bewegungsweg der Kettengliedachse heraus geschwenkt ist,
- Fig. 3A: eine Darstellung entsprechend Fig. 2A für eine andere Ausführungsform des Schmiergerätes, welches seitlich unverrückbar, dafür aber das Kettenband seitlich verschiebbar ist,
- Fig. 3B: eine Darstellung entsprechend Fig. 2B für ein Schmiergerät mit Mitnehmer entsprechend Fig. 3A, wobei ein Mitnehmerarm über eine Kettengliedachse geschwenkt und das entsprechende die zu schmierende Schmierstelle aufweisende Kettenglied seitlich in Richtung auf den Schmierkopf des Schmiergerätes verschoben ist,
- Fig. 3C: eine Darstellung entsprechend Fig. 2C für ein Schmiergerät nach Fig. 3A,
- Fig. 3D: eine Darstellung entsprechend Fig. 2D für ein Schmiergerät entsprechend Fig. 3A,
- Fig. 4: schematisch eine weitere Ausführungsform der Schmiereinrichtung,
- Fig. 5: ein Schmiergerät mit mehreren Schmierköpfen in einer Ausgangsposition in Untersicht,
- Fig. 6: eine Seitenansicht des Schmiergerätes nach Fig. 2,
- Fig. 7: einen Schaltplan zu den Ausführungsformen nach Fig. 2 und 3,
- Fig. 8: ein abzuschmierendes Kettenband in Seitenansicht (weggebrochen),
- Fig. 9: das Kettenband nach Fig. 5 in Draufsicht, und
- Fig. 10: schematisch eine Schmiereinrichtung gemäß einer weiteren Ausführungsform in Grundstellung

Die zeichnerisch dargestellte Schmiereinrichtung dient dem Abschmieren von wandernden Schmierstellen z.B. an einem Rollen- und Kettenband 1. Zur Versorgung der Schmiereinrichtung wird Schmierstoff von einer Zentralschmierpumpe zugeführt. Die Ansteuerung der Pumpe erfolgt über einen Druckschalter 51 mit zwei Schaltpunkten: p ≤ pmin (Pumpe an) und p ≥ pmax (Pumpe aus). Bei Beginn des Schmiervorganges ist ein Nährungsschalter S5 geschaltet, um die Bereitschaftsstellung der Schmiereinrichtung anzuzeigen.

Ein Nährungsschalter S4 erfasst induktiv die Position einer wandernden Schmierstelle, bspw. einer Laufrolle, welche geschmiert werden soll, und schaltet dabei ein 3/2-Wegeventil Y1. Dadurch wird Luftdruck auf einen Mitnehmerzylinder B gegeben und ein Mitnehmer C fährt aus. Die Reihenfolge der Abschmiervorgänge, d. h. ob bspw. jede Laufrolle oder jede zweite Laufrolle und dgl. geschmiert werden soll, ist von der Anzahl der Laufrollen und von der Geschwindigkeit des Ketten- oder Rollenbandes bzw. dem Rollenabstand abhängig.

Die zu schmierende Laufrolle erfasst dann den Mitnehmer C und bewegt dabei das Schmiergerät 2 parallel zu der Laufrolle, um den Abschmiervorgang durchzuführen. Zu diesem Zweck ist das Schmiergerät 2 auf einem Schlitten F angeordnet, welcher auf einem Rahmen G leicht verschieblich gelagert ist. Damit der Schlitten F nicht ruckweise, sondern kontrolliert mit der Laufrolle mitfährt, wird ein Rückfahrzylinder A über ein Druckregler H mit einem voreingestellten Dämpfungsdruck beaufschlagt.

Während des Bewegungsvorganges erfasst ein (nicht dargestelltes) Schaltelement einen Nährungsschalter S6 und schaltet ein 3/2-Wegeventil Y2. Dadurch wirkt Luftdruck auf einen Schmierkopfzylinder E, so dass ein Schmierkopf D auf die z.B. als Schmiernippel ausgebildete Schmierstelle ausgefahren wird. Durch Anpressen des Schmierkopfes D auf den Rollennippel fördert ein Kolben den Schmierstoff aus einer vorgefüllten Dosierkammer zu der Schmierstelle.

Verlässt das Schaltelement den Nährungsschalter S6, so wird das 3/2-Wegeventil Y2 wieder in Ruhestellung überführt. Eine Rückstellfeder des Schmierkopfzylinders E bewegt den Schmierkopf D in seine Ausgangsstellung zurück. Dabei füllt eine Zentralversorgungspumpe die Dosierkammer für den nächsten Förderhub mit Schmierstoff auf.

Erreicht das Schaltelement einen Nährungsschalter S7, so schaltet es ein 3/2-Wegeventil Y1 wieder in seine Ausgangslage. Eine Rückstellfeder des Mitnehmerzylinders B bewegt den Mitnehmer C in eine Ausgangsstellung zurück. Mit Hilfe eines Schnellentlüftungsventils kann für eine schnelle Rückstellung Sorge getragen werden.

Hat der Mitnehmer C seine Ausgangsstellung erreicht, schaltet ein Nährungsschalter S8 das Ventil Y3. Auf diese Weise wirkt Druckluft auf den doppelt-wirkenden Rückfahrzylinder A und der Dämpfungsdruck, welcher bei der Vorwärtsbewegung des Schmiergerätes 2 anstand, wird abgeschaltet. Das Schmiergerät 2 fährt in seine Ausgangsstellung zurück. Die Rückfahrgeschwindigkeit ist über ein Drosselventil E regelbar.

Ein ggf. vorgesehener Positionsschalter (Rollenhebelschalter) S2 hat Sicherungsfunktion: Bei Versagen oder zu trägem Auswerten des Nährungsschalters S7 betätigt das Schaltelement den Positionsschalter S2. Dann werden alle Ventile spannungsfrei geschaltet und das Schmiergerät 2 bleibt in seiner Endstellung stehen. Um Schäden durch automatischen Rücktransport zu vermeiden, ist das Schmiergerät 2 manuell aus der Endstellung zu bringen. Bei Quittieren der Störung bewegt sich das Schmiergerät 2 dann selbsttätig in die Ausgangstellung zurück.

Erfindungsgemäß greift an den Schlitten F, welcher das Schmiergerät 2 trägt, ein Beschleunigungszylinder (Anschubzylinder) J an. Dieser wird mittels eines Ventils so gesteuert, dass vor oder gleichzeitig mit dem Ausfahren des Mitnehmers C eine Anschubphase des Schlittens F und damit das Schmiergerätes 2 erfolgt. Die Sensorsteuerung ist dabei so getroffen, dass das Band 1 bei Geschwindigkeiten größer als eine vorgegebene Maximalgeschwindigkeit, bspw. größer als 0,4 m/sec, innerhalb eines vorgegebenen Anschubweges auf den Mitnehmer C trifft. Der Schlitten F wird dabei mit einer durch Drosselrückschlagventil einstellbaren Anschubgeschwindigkeit, bspw. von 0,4 m/sec parallel zu dem Band 1 verfahren. Von Anfang an wirkt der Rückfahrzylinder A mit ca. 0,5 bar gegen die Schlittenbewegung, um ein Abprallen des Mitnehmers C von dem Band 1 zu verhindern. Circa 10 mm nach dem Ende des Anschubweges betätigt der Nährungsschalter S6 den Schmierkopf D, wodurch der Schmiervorgang eingeleitet wird. Gleichzeitig wird der Beschleunigungszylinder J drucklos. Nach der Abgabephase des Schmierstoffes an das Band 1 lässt der Nährungsschalter S6 den Schmierkopf D zurückfahren. Gleichzeitig wird der Vordruck bzw. Anpressdruck von 0,5 bar mittels eines zusätzlichen Ventils gegen die Schlittenbewegung abgebaut. Nach einer kurzen Verzögerungszeit fährt auch der Mitnehmer C zurück, welcher in seiner Endstellung den Nährungsschalter S8 betätigt und damit die Rückfahrt des Schlittens F einleitet. Bei der Rückfahrt des Schlittens F wird auch der drucklose Beschleunigungszylinder J in Endlage gefahren. Mit einem Drosselrückschlagventil I an dem Rückfahrzylinder A kann die Rückfahrgeschwindigkeit eingestellt werden.

Ist der Schlitten F wieder in Anfangsstellung, wird der Sensor S5 betätigt, welcher den vollen Rückfahrdruck von ca. 6 bar durch Umschalten über einen Druckminderer mittels eines zusätzlichen Ventils auf den Anpressdruck von 0,5 bar reduziert. Damit befindet sich die Schmiereinrichtung wieder in Ausgangsstellung.

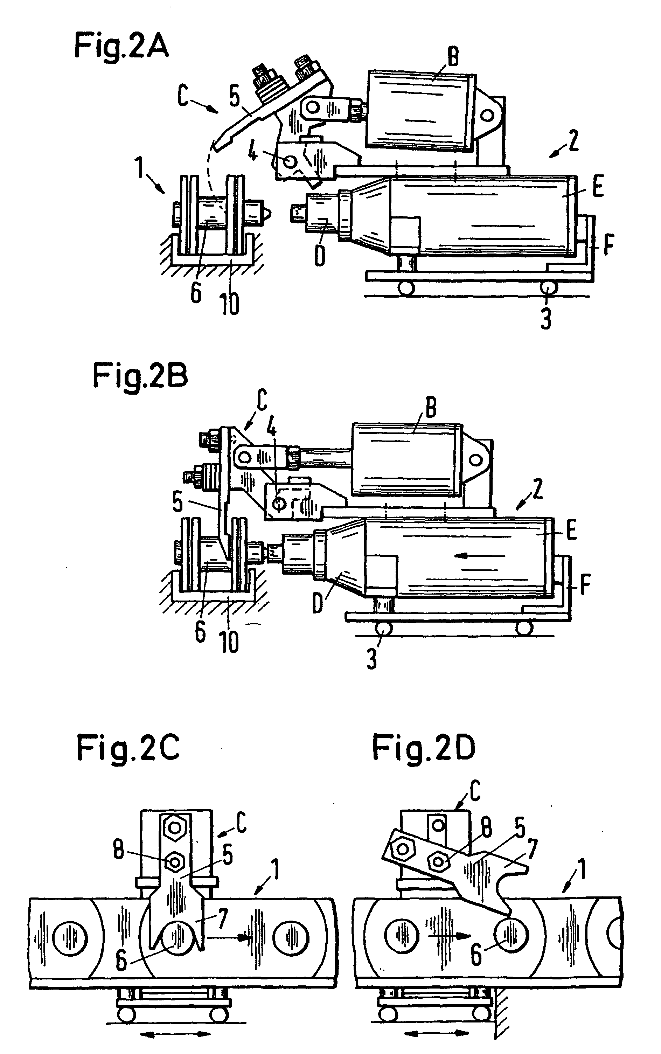

Gemäß den Fig. 2A bis 2D ist das Schmiergerät 2 mit Hilfe eines Rollen 3 aufweisenden Schlittens F seitlich senkrecht zu der Bewegungsrichtung eines in einer Schiene 10 beidseitig geführten Kettenbandes 1 verschiebbar, so dass der Schmierkopf D in und außer Eingriff mit der zu schmierenden Schmierstelle gebracht werden kann. Von dem Schmiergerät 2 wird ein Mitnehmer C getragen, dessen Mitnehmerzylinder B für ein Ein- und Ausschwenken eines um eine Schwenkachse 4 gelagerten Mitnehmerarmes 5 sorgt. In der in Fig. 2A dargestellten Ruhestellung befindet sich der Mitnehmerarm 5 oberhalb des Kettenbandes 1. Bei ausgefahrenem Kolben des Mitnehmerzylinders B gemäß Fig. 2B ist der Mitnehmerarm 5 in ein Kettenglied eingeschwenkt. Dabei übergreift der Mitnehmerarm 5 entsprechend Fig. 2C eine Kettengliedachse 6 mit einem vorderen gabelförmigen Ende 7. Entsprechend Fig. 2D ist der Mitnehmerarm 5 um eine weitere Schwenkachse 8 schwenkbar gelagert, welche senkrecht zur Bewegungsrichtung des Bandes 1 derart steht, dass der Mitnehmerarm 5 in Bewegungsrichtung der Kettengliedachse 6 aus dessen Bewegungsrichtung bei übermäßiger Beanspruchung, bspw. gegen die Wirkung einer Rückstellkraft, in eine arretierte Ruhestellung herausschwenkt. Dies ist von Vorteil, wenn es zu einer Störung in der Bewegung des Schmiergerätes 2 längs des Kettenbandes 2 kommt und das zu schmierende Kettenband 1 weiterläuft.

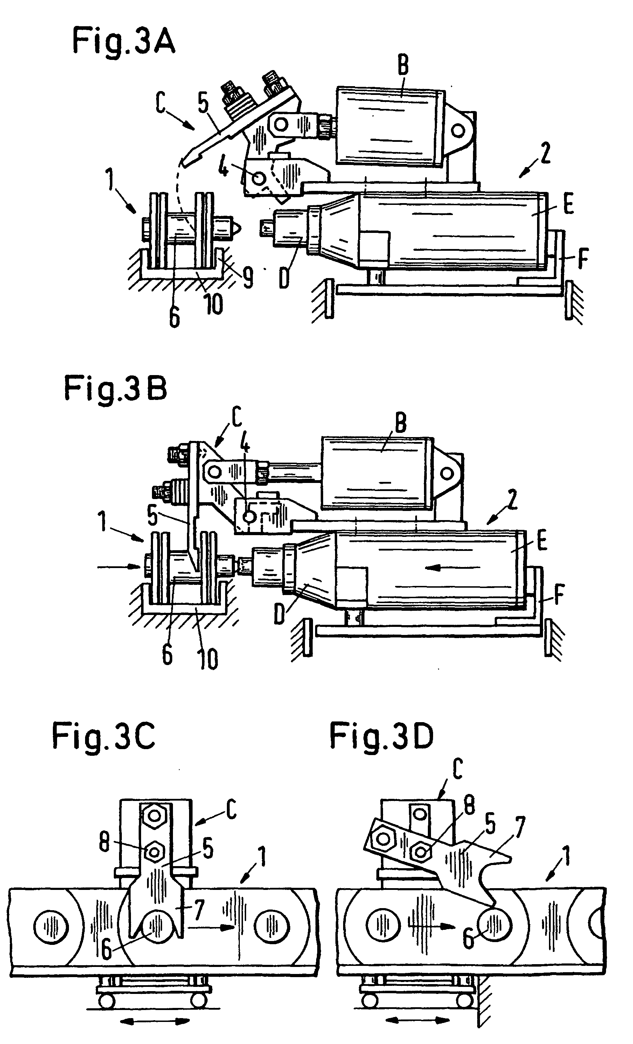

Die in den Fig. 3A bis 3D dargestellte Ausführungsform eines Schmiergerätes 2 mit Mitnehmer C unterscheidet sich von der in den Fig. 2A bis 2D dargestellten im Wesentlichen dadurch, dass das den Mitnehmer C tragende Schmiergerät 2 seitlich unverrückbar ist, dafür aber das Kettenband 1 mit Hilfe des Mitnehmerarmes 5 aus einer in Fig. 3A dargestellten Ausgangslage, in welcher es sich im Abstand von dem Schmierkopf D befindet, unter dem Einschwenken des Mitnehmerarmes 5 in eine in Fig. 38 dargestellte Endlage überführbar ist, in welcher die zu schmierende Schmierstelle an die Austrittsöffnung des Schmierkopfes D herangeführt ist. Zur richtigen seitlichen Positionierung des Kettenbandes 1 im Bereich der Schmierstelle dient dabei ein Rand 9 der Schiene 10, auf welcher das Kettenband 1 läuft.

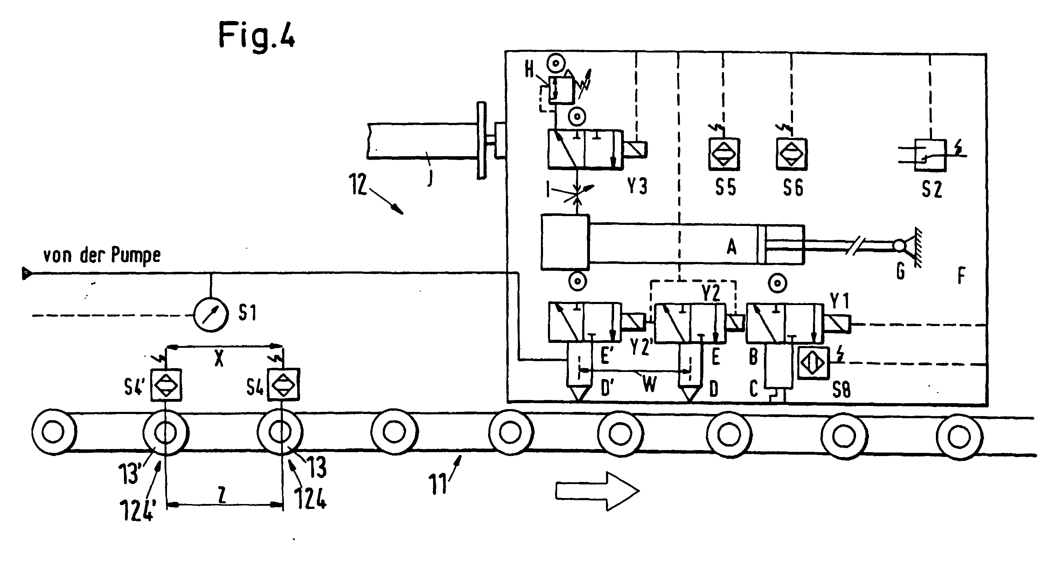

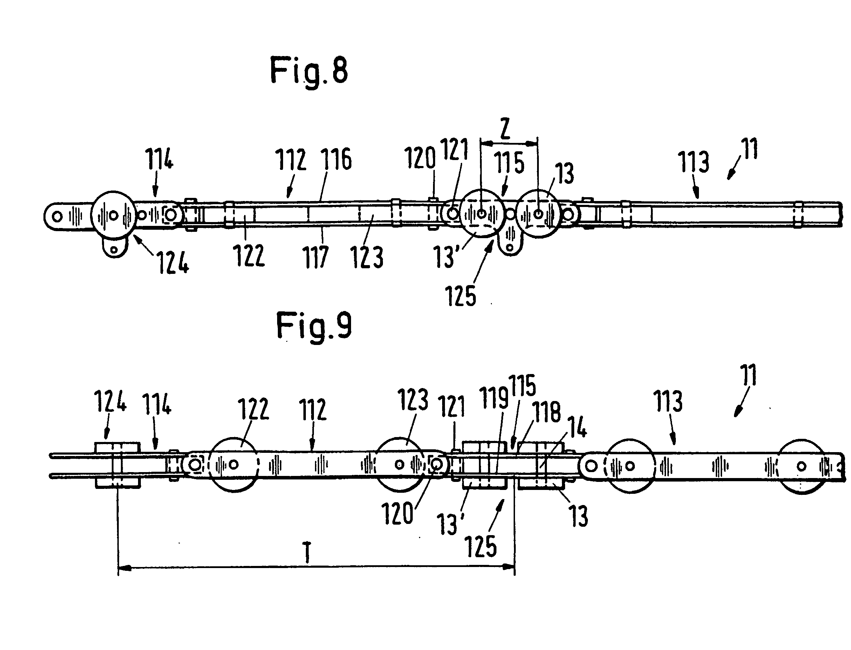

Die zeichnerisch in Fig. 4 dargestellte Schmiereinrichtung dient dem Abschmieren von wandernden Schmierstellen, z. B. an einem Rollen- und Kettenband 11 mit abzuschmierenden Tragrollen 13 und Rollen- oder Kettengliedbolzen 14 aufweisenden Einzelrollenpaaren 124, 124' (Fig. 4) und Doppelrollenpaaren 125 (Fig. 8 und 9). Das Rollen- oder Kettenband 11 kann dabei auf einer mit Rändern 16 versehenen Schiene 17 geführt werden. Zur Versorgung der Schmiereinrichtung wird Schmierstoff von einer Zentralschmierpumpe zugeführt. Die Ansteuerung der Pumpe erfolgt über einen Druckschalter S1 mit zwei Schaltpunkten: P ≤ Pₘᵢₙ (Pumpe an) und P ≤ Pₘₐₓ (Pumpe aus). Bei Beginn des Schmiervorganges ist ein Näherungsschalter S5 geschaltet, um die Bereitschaftsstellung der Schmiereinrichtung anzuzeigen.

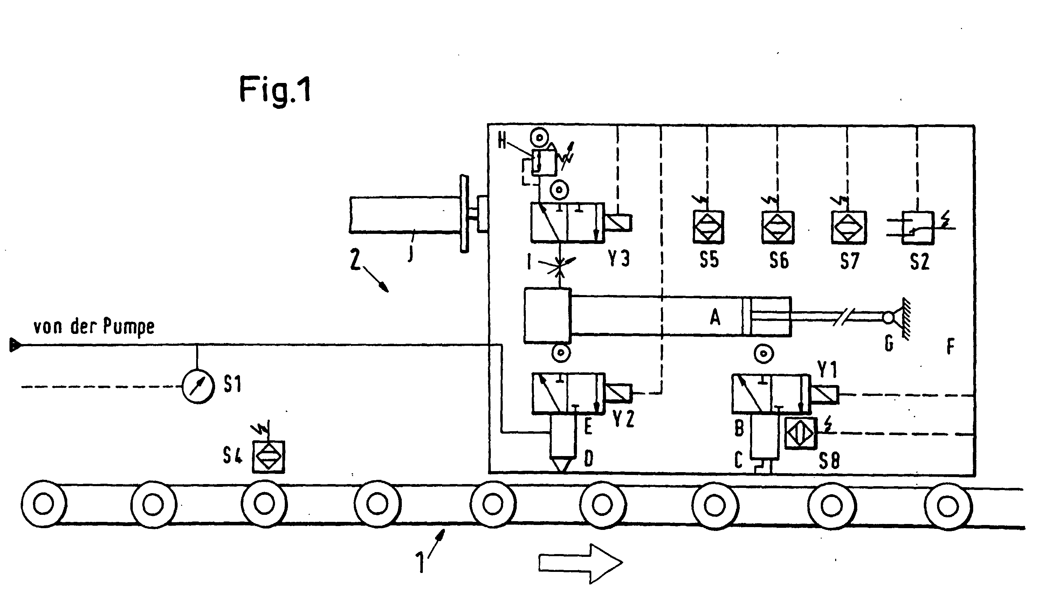

Ein Näherungsschalter S4 erfasst induktiv die Position einer wandernden ersten Schmierstelle, beispielsweise einer Tragrolle 13, welche geschmiert werden soll. Ein zweiter Näherungsschalter S4' ist für die Erfassung einer zweiten benachbarten wandernden Tragrolle 13' eines weiteren Einzelrollenpaares 124' oder eines Doppelrollenpaares 125 vorgesehen, welche in dem selben Arbeitsgang geschmiert werden soll. Der Abstand zwischen zwei Schmierstellen - d. h. z. B. der Abstand Z der Rollenachsen zweier Einzelrollenpaare 124, 124' (Fig. 1) oder eines Doppeltragrollenpaares 125 (Fig. 8) - kann grundsätzlich beliebig ausgebildet sein. Wichtig ist jedoch, dass der Abstand X der beiden Schaltern S4, S4' mit dem Abstand Z der Rollenachsen der zu schmierenden Tragrollen 13, 13' (Fig. 4) zweier Einzelrollenpaare 124, 124' (Fig. 4) oder eines Doppeltragrollenpaares zumindest im Wesentlichen übereinstimmt. Dabei schaltet z. B. zunächst der Näherungsschalter S4 ein 5/2-Wegeventil Y1. Dadurch wird Luftdruck auf einen Mitnehmerzylinder B gegeben und ein Mitnehmer C fährt aus. Einzelheiten des Mitnehmers C sind dem Gebrauchsmuster DE 200 15 780 U zu entnehmen, dessen Offenbarungsgehalt in vollem Umfang in die vorliegende Offenbarung einbezogen wird. Grundsätzlich ist die Reihenfolge der Abschmiervorgänge, d. h. ob beispielsweise jedes Paar von Tragrollen 13, 13' oder jedes zweite Paar von Tragrolle 13, 13' oder dergleichen geschmiert werden soll, von der Anzahl der Tragrollen und von der Geschwindigkeit des Ketten- oder Rollen- oder Kettenbandes bzw. dem Rollenabstand abhängig.

Der ausgefahrene Mitnehmer C erfasst die Kette 11 und diese bewegt darum das Schmiergerät 12 parallel zu der Tragrolle 13, um den Abschmiervorgang durchzuführen. Zu diesem Zweck ist das Schmiergerät 12 auf einem Schlitten F angeordnet, welcher auf einem Rahmen oder einer Grundplatte G leicht verschieblich gelagert ist. Damit der Schlitten F nicht ruckweise, sondern kontrolliert mit der Tragrolle 13 mitfährt, kann ein Rückfahrzylinder A über ein Druckregelventil H mit einem voreingestellten Dämpfungsdruck beaufschlagt werden.

Wenn gleichzeitig oder innerhalb eines vorgegebenen Zeitintervalls neben dem ersten Näherungsschalter S4 auch der zweite Näherungsschalter S4' anspricht, liegt ein Doppeltragrollenpaar vor, wenn der Näherungsschalter S4 alleine anspricht, handelt es sich um ein Einzeltragrollenpaar. Während des Bewegungsvorganges des Schlittens F verlässt der Näherungsschalter S5 ein (nicht dargestelltes) Schaltelement; dabei schalten die 5/2-Wegeventile Y2, Y2'. Dadurch wirkt Luftdruck auf die Schmierkopfzylinder E, E', so dass die beiden Schmierköpfe D, D' auf die z. B. als Schmiernippel ausgebildeten Schmierstellen ausgefahren werden. Durch Anpressen der beiden Schmierköpfe D, D' auf den jeweiligen Rollennippel fördert ein Kolben den Schmierstoff aus einer vorgefüllten Dosierkammer zu der jeweiligen Schmierstelle.

Erreicht der Näherungsschalter S6 ein zweites (nicht dargestelltes) Schaltelement, so werden die 5/2-Wegeventile Y2, Y2' wieder in Ruhestellung überführt. Wenn der Näherungsschalter S4 alleine schaltet, wird nur das Ventil Y2 angesteuert. Eine Rückstellfeder der Schmierkopfzylinder E, E' bewegt die Schmierköpfe D, D' in die Ausgangsstellung zurück. Dabei füllt eine Zentralversorgungspumpe die Dosierkammer für den nächsten Förderhub mit Schmierstoff auf.

Nach dem Schalten des Näherungsschalters S6 startet eine programmierbare Zeit, nach deren Ablauf das 3/2-Wegeventil Y1 wieder in seine Ausgangslage schaltet. Der Luftdruck bewegt den Mitnehmer C in eine Ausgangsstellung zurück. Mit Hilfe eines Schnellentlüftungsventils kann für eine schnelle Rückstellung Sorge getragen werden.

Hat der Mitnehmer C seine Ausgangsstellung erreicht, schaltet ein Näherungsschalter S8 das Ventil Y3. Auf diese Weise wirkt Druckluft auf den doppelt wirkenden Rückfahrzylinder A und der Dämpfungsdruck, welcher bei der Vorwärtsbewegung des Schmiergerätes 12 anstand, wird abgeschaltet. Das Schmiergerät 12 fährt in seine Ausgangsstellung zurück. Die Rückfahrgeschwindigkeit ist über ein Drosselventil I regelbar.

Ein vorgesehener Positionsschalter (Rollenhebelschalter) S2 hat Sicherungsfunktion. Bei Versagen oder zu trägem Auswerten des Näherungsschalters S7 betätigt das Schaltelement den Positionsschalter S2. Dann werden alle Ventile spannungsfrei geschaltet und das Schmiergerät 12 bleibt in seiner Endstellung stehen. Um Schäden durch automatischen Rücktransport zu vermeiden, ist das Schmiergerät manuell aus der Endstellung zu bringen. Bei Quittieren der Störung bewegt sich das Schmiergerät dann selbsttätig in die Ausgangsstellung zurück.

Erfindungsgemäß greift an den Schlitten F, welcher das Schmiergerät 12 trägt, ein Beschleunigungszylinder (Anschubzylinder J) an. Dieser wird mittelt eines Ventils so gesteuert, dass vor oder gleichzeitig mit dem Ausfahren des Mitnehmers C eine Anschubphase des Schlittens F und damit des Schmiergerätes 12 erfolgt. Die Sensorsteuerung ist dabei so getroffen, dass das Band 11 bei Geschwindigkeiten größer als eine vorgegebene Maximalgeschwindigkeit, beispielsweise größer als 0,4 m/s, innerhalb eines vorgegebenen Anschubweges auf den Mitnehmer C trifft. Der Schlitten F wird dabei mit einer durch ein Drosselrückschlagventil einstellbaren Anschubgeschwindigkeit, beispielsweise von 0,4 m/s, parallel zu dem Band 11 verfahren. Von Anfang an wirkt der Rückfahrzylinder A mit ca. 0,5 bar gegen die Schlittenbewegung, um ein Abprallen des Mitnehmers C von dem Band 11 zu verhindern. Beispielsweise 10 mm nach dem Ende des Anschubweges betätigt der Näherungsschalter S6 jeden Schmierkopf D, D', wodurch der Schmiervorgang eingeleitet wird. Gleichzeitig wird der Beschleunigungszylinder J drucklos. Nach der Abgabephase des Schmierstoffes an das Band 11 lässt der Nährungsschalter S6 jeden Schmierkopf D, D' zurückfahren. Gleichzeitig wird der Vordruck bzw. Anpressdruck von 0,5 bar mittels eines zusätzlichen Ventils gegen die Schlittenbewegung abgebaut. Nach einer kurzen Verzögerungszeit fährt auch der Mitnehmer C zurück, welcher an seiner Endstellung den Näherungsschalter S8 betätigt und damit die Rückfahrt des Schlittens F einleitet. Bei der Rückfahrt des Schlittens F wird auch der drucklose Beschleunigungszylinder J in Endlage gefahren. Mit einem Drosselrückschlagventil I an dem Rückfahrzylinder A kann die Rückfahrgeschwindigkeit eingestellt werden.

Ist der Schlitten F wieder in Anfangsstellung, wird der Sensor S5 betätigt, welcher den vollen Rückfahrdruck von beispielsweise ca. 6 bar durch Umschalten über einen Druckminderer mittels eines zusätzlichen Ventils auf einen Dämpfungsdruck von 0,5 bar reduziert. Damit befindet sich die Schmiereinrichtung wieder in Ausgangsstellung.

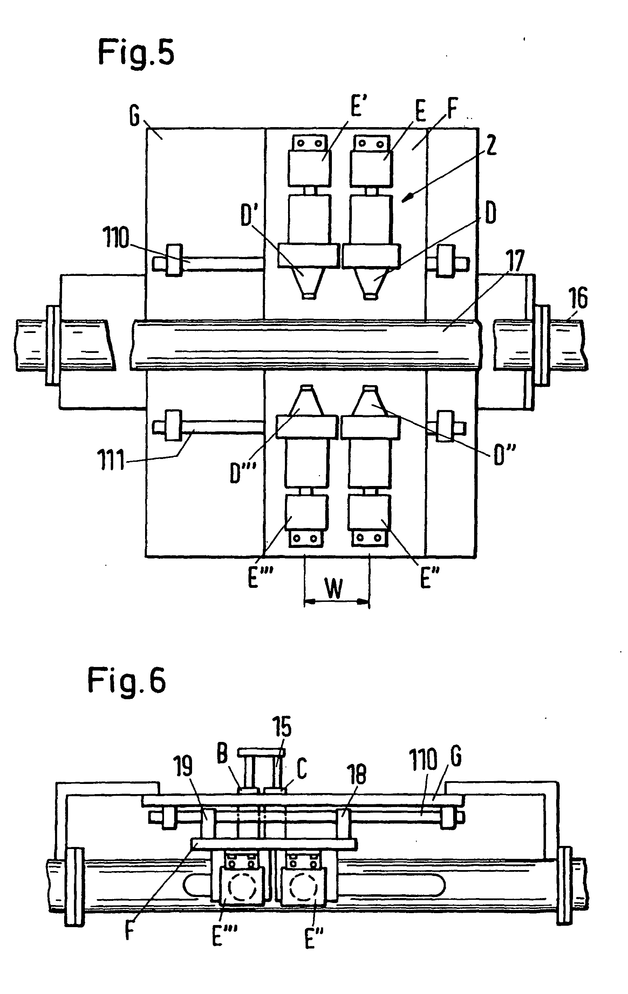

Den Fig. 5 und 6 ist eine Schmiereinrichtung zu entnehmen, welche über vier Schmierköpfe D, D'; D", D"' verfügt, wobei übereinstimmende Merkmale mit übereinstimmenden Bezugsziffern versehen sind. Die Schmierköpfe D bis D"' sind jeweils paarweise einander gegenüberliegend zueinander angeordnet, so dass sich das zu schmierende Band 11 jeweils zwischen zwei paarweise zueinander gehörenden Schmierköpfen D, D" und D', D"' für jeweils ein Tragrollenpaar befindet. Die Schmierköpfe D bis D"' befinden sich in einer hinteren Endstellung, wenn die zugehörigen Zylinder E, E', E", E"' nicht mit Druck beaufschlagt sind.

Der mit den Schmierköpfen D bis D"' bestückte Schlitten F ist über Lager 18, 19 an zu der Schiene 17 parallelen Führungssäulen 110, 111 linear parallel zur Bandachse verschiebbar geführt. Der Abstand W der Schmierköpfe D, D' bzw. D", D"' voneinander ist für eine bestimmte Schmiereinrichtung fest eingestellt und hängt von dem Abstand zu der Schmierstelle ab. Der Abstand W zwischen jeweils zwei Schmierkopfpaaren D, D"; D', D"' auf dem Schlitten F ist so jeweils dem Abstand Z zweier an dem Band 11 aufeinander folgender Schmierstellen angepasst. Der Abstand Z stimmt andererseits mit dem Abstand X zwischen den beiden Sensoren S4, S4' überein.

Die Schmierköpfe D bis D"' sind vorzugsweise paarweise in Richtung auf die Schmierstellen des Bandes zu- und von diesen weg bewegbar, so dass sich die aus dem Abschmierdruck ergebenden Belastungskräfte auf das Band 1 und das Schmiergerät 2 gegeneinander aufheben.

Der Mitnehmer C, welcher auf dem Schlitten F mit vier Schmierköpfen D bis D"' untergebracht ist, wirkt in diesem Fall senkrecht von oben und seine z. B. gabelförmige Kontur (vgl. z.B. Fig. 2c und 2d der DE 200 15 780 U) verhindert, dass der Schlitten F beim Erfassen des Rollen- oder Kettengliedbolzens 4 abgestoßen wird.

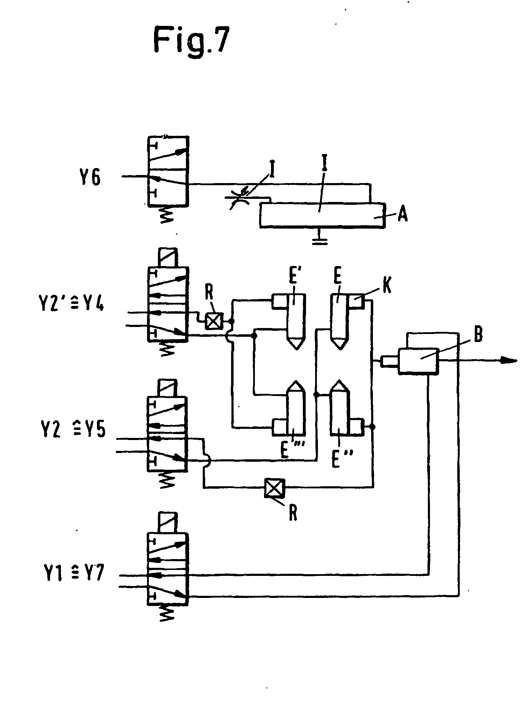

Ein schematischer Schaltplan für die Ansteuerung der in den Fig. 5 und 6 gezeigten Schmierköpfe D bis D"' geht aus Fig. 7 hervor. Für die Beschleunigung des Schlittens F wird ein (dort nicht gezeigter) Beschleunigungszylinder J herangezogen, zu dessen Ansteuerung ein (dort ebenfalls nicht gezeigtes) elektrisch betätigbares 5/2-Wegeventil vorgesehen ist. Der Ansteuerung der vier Zylinder E bis E"' dienen zwei 5/2-Wegeventile Y4, Y5. Dabei sind die Versorgungsleitungen und die Entsorgungsleitungen von jeweils zwei paarweise einander gegenüber liegenden Schmierköpfen D, D"; D', D"' paarweise an einen Eingang oder Ausgang des zugeordneten 5/2-Wegeventils Y4, Y5 angeschlossen. Jedem der Zylinder E bis E"' ist in einer Druck/Entlüftungsleitung ferner jeweils ein Schnellentlüftungsventil K zugeordnet. Nach der Zusammenführung der paarweise zusammengehörenden Druck/Entlüftungsleitungen zweier gegenüberliegender Schmierköpfe D, D"; D', D"' ist jeweils in der Druck/Entlüftungsleitung ein Druckregler R vorgesehen, welcher der Einstellung des Schmierkopf-Anpressdruckes dient. Für die Zurückführung des Schlittens F dient der Rückfahrzylinder A, zu dessen Ansteuerung ein elektrisch betätigbares 3/2-Wegeventil Y6 vorgesehen ist. Der Betätigung des Mitnehmerzylinders B dient ein weiteres Ventil Y7.

Aus den Fig. 8 und 9 geht eine abzuschmierendes Band 11 nach Art einer sogenannten Kardankette oder Kreuzgelenkkette hervor. Diese verfügt über abwechselnde Führungsglieder 112, 113 und Trag- oder Lastglieder 114, 115 welche jeweils aus paarweise gleichen Führungsgliedlaschen 116, 117 und Trag- oder Lastgliedlaschen 118, 119 aufgebaut sind. Für die gelenkige Verbindung der Glieder sind Spannhülsen oder Bolzen 120, 121 vorgesehen, welche jeweils paarweise und gegeneinander um 90° versetzt am Gliedende angeordnet sind, so dass sich Kardangelenkfunktion ergibt.

Jedes Führungsglied 112, 113 verfügt über einzelne und im Abstand zueinander angeordnete Führungsrollen 122, 123. Die Trag- oder Lastglieder 114, 115 sind mit Einzeltragrollenpaaren 124 oder mit Doppeltragrollenpaaren 125 ausgestattet und jeweils mit Rollen- oder Kettengliedbolzen 14 an den Tragoder Lastgliedern 114, 115 drehbar gelagert. An den seitlichen Stirnflächen der Rollen- oder Kettanbolzen 124 befinden sich bspw. abzuschmierende Schmiernippel. Einzeltragrollenpaare 124 und Doppeltragrollenpaare 125 können jeweils im Wechsel sowie in dem Abstand einer Teilung T vorgesehen sein.

Bei den Doppeltragrollenpaaren 125 stimmt der Abstand Z der Rollenachsen im Wesentlichen mit einem Abstand X der Sensoren S4, S4' überein. Die wechselnde Anordnung von abzuschmierenden Einzel- und Doppeltragrollenpaaren 124, 125 erfordert eine flexibel anpassbare Schmiereinrichtung.

Die Steuerung der Schmiervorrichtung nach den Fig. 5 bis 7 geschieht z. B. wie folgt. Der Abstand X der Sensoren S4, S4' wird auf Abstand Z der Rollenachsen eines Doppeltragrollenpaares 125 eingestellt, so dass die Erkennung eines Einzel- oder Doppeltragrollenpaares 124, 126 ermöglicht wird. Gleichzeitige Signale der beiden Sensoren S4, S4' oder solche innerhalb eines vorbestimmten Zeitintervalls (wenn die Abstände Z und X nicht genau übereinstimmen) entsprechen einem Doppeltragrollenpaar 125. Wenn der in zeitlich größerem Abstand die Signale der Sensoren S4, S4' ergehen, liegt ein Einzeltragrollenpaar 124 vor. Dementsprechend erfolgt die Aktivierung beider Schmierkopfpaare D, D"; D', D"' oder nur die Aktivierung des einen Schmierkopfpaares D, D".

Die Schmierung der Führungsrollen 122, 123 der Kardankette 1 nach Fig. 8 und 9 kann bspw. mit einer Schmiereinrichtung nach DE 200 15 780 U mit entsprechender Ausrichtung der dortigen Schmierköpfe erfolgen.

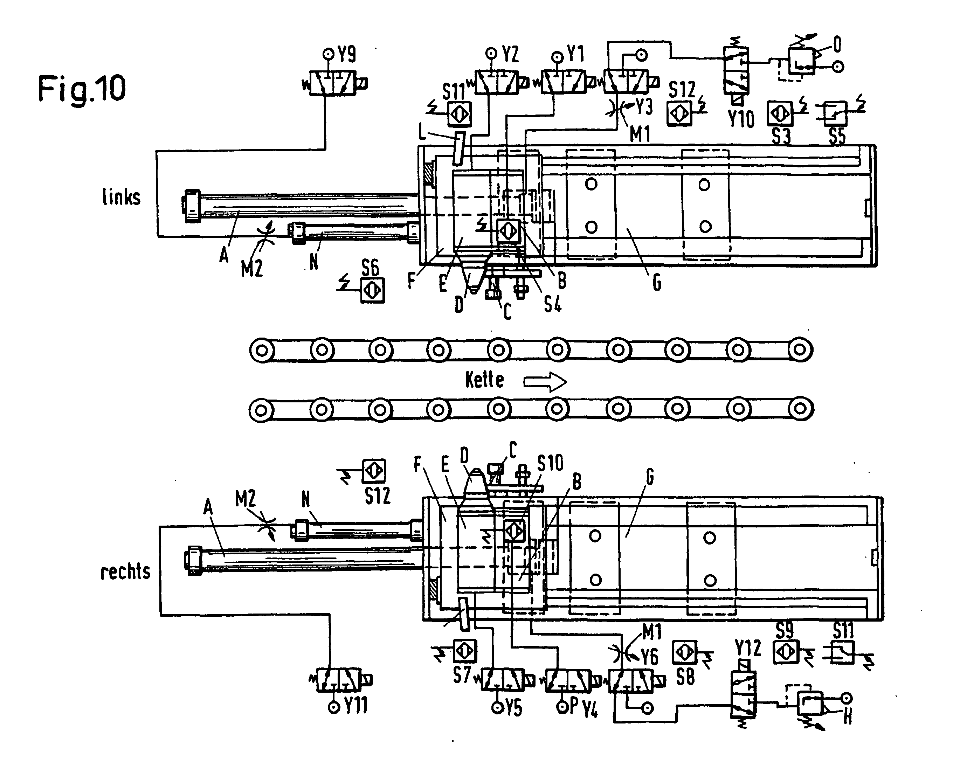

Die in Fig. 10 dargestellte Schmiereinrichtung dient dem Abschmieren von wandernden Schmierstellen an Rollen- und Kettenbändern. Zur Versorgung der Schmiereinrichtung mit Schmierstoff sind Zentralschmierpumpen mit Druckbegrenzungsventilen vorgesehen. In Grundstellung ist der Näherungsschalter S11 geschaltet. Der Näherungsschalter S6 erfasst induktiv die Position der Laufrolle und schaltet dabei die 3/2-Wegeventile Y1 und Y9. Der Luftdruck wirkt auf den Mitnehmerzylinder B, der Mitnehmer C fährt aus, der Luftdruck wirkt auf den Anschlusszylinder N, der Schlitten F wird in Kettenlaufrichtung bewegt. Ein Anschieben des Schlittens F dient zum Verkleinern des Kraftimpulses beim Auftreffen der Kettenrolle auf den Mitnehmer C. Die Reihenfolge der Abschmiervorgänge (jede Laufrolle oder z. B. jede 6. Laufrolle usw.) ist von der Anzahl der Laufrollen und von der Geschwindigkeit des Ketten- oder Rollenbandes bzw. vom Rollenabstand abhängig.

Die zu schmierende Laufrolle erfasst den Mitnehmer C und bewegt dabei das Schmiergerät genau parallel zu der Laufrolle, um den Abschmiervorgang durchführen zu können. Das Schmiergerät ist mit dem Schlitten F verbunden, welcher auf dem Rahmen G leicht beweglich gelagert ist. Während des Bewegungsvorganges erfasst das Schaltelement L den Näherungsschalter S12 und schaltet das 3/2-Wegeventil Y2. Der Luftdruck wirkt nun auf den Schmierkopfzylinder E. Der Schmierkopf D fährt auf den Schmiernippel. Der Näherungsschalter S12 liegt mindestens 50 mm hinter der Endposition des Anschubzylinderkolbens. Dadurch ist gewährleistet, dass bei Erreichen des Näherungsschalters S12 die abzuschmierende Rolle an dem Mitnehmer C anliegt. Damit der Schlitten F während der Schmierphase nicht ruckweise, sondern kontrolliert mit der Laufrolle mitfährt, ist der Zylinder A über ein Druckreduzierventil O mit einem Dämpfungsdruck beaufschlagt. Der Dämpfungsdruck ist werksseitig auf ca. 0,5 bar eingestellt.

Durch Anpressen des Schmierkopfes D an den Rollennippel fördert ein Kolben den Schmierstoff aus einer vorgefüllten Dosierkammer zu der Schmierstelle.

Erreicht das Schaltelement L den Näherungsschalter S3, wird die Bedämpfung beendet. Das 3/2-Wegeventil Y10 schaltet in Ruhestellung. Eine Rückstellfeder des Schmierkopfzylinders E bewegt den Schmierkopf D in seine Ausgangsstellung; dabei füllt eine Zentralversorgungspumpe die Dosierkammer für den nächsten Förderhub mit Schmierstoff auf. Gleichzeitig startet eine in der Steuerung programmierte Verzögerungszeit; nach Ablauf dieser Zeit schaltet das Ventil Y1 in Ruhestellung, eine Rückstellfeder bewegt den Mitnehmer C zurück.

Erreicht der Mitnehmer C seine Ruhestellung, schaltet er über den Schalter S4 das 3/2-Wegeventil Y3. Der Systemluftdruck bewegt das Schmiergerät mit dem Zylinder A in Grundstellung. Die Rückfahrgeschwindigkeit wird mit dem Drosselrückschlagventil M1 eingestellt. Gleichzeitig schaltet das Ventil Y10. Dadurch wird gewährleistet, dass der Schlitten F von dem Dämpfungsdruck in Grundstellung gehalten wird, wenn das Ventil Y3 wieder spannungslos geschaltet wird. Hat der Schlitten F seine Ausgangsstellung erreicht, schaltet das Schaltelement L über den Schalter S1 das Ventil Y3 in Ruhestellung. Das Schmiergerät befindet sich im Bereitschaftszustand für den nächsten Schmierimpuls.

Der Positionsschalter S5 hat lediglich Sicherungsfunktion: Bei Versagen oder zu trägem Auswerten des Näherungsschalters S3 betätigt das Schaltelement L den Positionsschalter S5. Alle Ventile werden spannungsfrei geschaltet. Das Schmiergerät bleibt in der Endstellung stehen. Um Schäden durch automatischen Rücktransport zu vermeiden, muss das Schmiergerät manuell aus der Endstellung gebracht werden. Bei Quittieren der Störung bewegt sich das Schmiergerät dann automatisch in die Grundstellung zurück.

Alle Luftanschlüsse an den Pneumatikzylindern sind mit Schnellentlüftungsventilen ausgerüstet, um eine ausreichende Arbeitsgeschwindigkeit der Schmiereinrichtung sicherzustellen.

### Bezugszeichenliste

- 1: Band oder dgl.
- 2: Schmiergerät
- 3: Rollen
- 4: Schwenkachse
- 5: Mitnehmerarm
- 6: Rollen- oder Kettengliedachse
- 7: gabelförmiges Ende
- 8: Schwenkachse
- 9: Rand
- 10: Schiene
- 11: Band oder dgl.
- 12: Schmiergerät
- 13: Tragrollen
- 14: Rollen- oder Kettengliedbolzen
- 15: Mitnehmerarm
- 16: Rand
- 17: Schiene
- 18, 19: Lager
- 110, 111: Führungssäulen
- 112, 113: Führungsglieder
- 114, 115: Trag- oder Lastglieder
- 116, 117: Führungsgliedlaschen
- 118, 119: Trag- oder Lastgliedlaschen
- 120, 121: Spannhülsen, Bolzen oder dgl.
- 122, 123: Führungsrollen
- 124: Einzeltragrollenpaar
- 125: Doppeltragrollenpaar
- A: Rückfahrzylinder
- B: Mitnehmerzylinder
- C: Mitnehmer
- D: Schmierkopf
- E: Schmierkopfzylinder
- F: Schlitten
- G: Rahmen
- H: Druckregler
- I: Drosselventil
- J: Beschleunigungszylinder
- K: Schnellentlüftungsventil
- L: Schaltelement
- M1: Drosselrückschlagventil
- M2: Drosselrückschlagventil
- N: Anschubzylinder
- O: Druckreduzierventil
- R: Druckregler

- S1: Druckschalter
- S2: Rollenhebelschalter
- S3 bis S12: Nährungsschalter

- T: Teilung
- W: Abstand der Schmierköpfe D, D'
- X: Abstand der Sensoren S4, S4'

- Y1 bis Y12: Ventile
- Z: Abstand der Rollenachsen bzw. Schmierstellen

## Patentansprüche

1. Schmiereinrichtung zum Abschmieren wandernder Schmierstellen, wie solchen an einem Band (1), insbesondere an einem Rollen- oder Kettenband (1), welches ein in Längsrichtung der Schmierstellenbewegung hin- und herverschieblich gelagertes Schmiergerät (2) aufweist, welches einen relativ zu dem Band (1) oder dgl. die Schmierstellen aufweisenden Einrichtung eine Ruhestellung und eine Mitnahmestellung einnehmenden Mitnehmer (C) aufweist, wobei das Band (1) oder dgl. den in Mitnahmestellung befindlichen Mitnehmer (C) und damit das Schmiergerät (2) über eine vorgegebene Laufstrecke in der Geschwindigkeit des Bandes (1) oder dgl. mitnimmt, auf welcher ein Schmierkopf (D) durch seitliche Relativbewegung zwischen Band (1) oder dgl. und Schmiergerät (2) an eine Schmierstelle heranbewegbar und dieser Schmierstoff zuführbar ist und wobei an dem Ende der Laufstrecke sowohl der Schmierkopf (D) als auch der Mitnehmer (C) relativ zu dem Band (1) oder dgl. in die jeweilige Ruhestellung zurückgelangen und das Schmiergerät (1) längs des Bandes (1) oder dgl. in seine Ausgangsstellung zurückfahrbar ist, **dadurch gekennzeichnet, dass** vor oder gleichzeitig mit dem Ineingriffbringen des Mitnehmers (C) mit dem Band (1) oder dgl. das Schmiergerät (2) in Längsrichtung der Schmierstellenbewegung auf eine Anschubgeschwindigkeit anschiebbar ist, welche größer als Null und kleiner als die Geschwindigkeit des Bandes (1) oder dgl. ist.

2. Schmiereinrichtung nach Anspruch 1, **dadurch gekennzeichnet, dass** die Anschubgeschwindigkeit des Schmiergerätes (2) nicht mehr als eine vorgegebene Maximaldifferenz, wie etwa 0,4 m/sec, geringer ist als die Geschwindigkeit des Bandes (1) oder dgl.

3. Schmiereinrichtung nach Anspruch 1 oder 2, **dadurch gekennzeichnet, dass** die Anschubgeschwindigkeit des Schmiergerätes (2) nicht mehr als ein vorgegebenen Maximalwert, wie etwa 0,4 m/sec, beträgt.

4. Schmiereinrichtung nach einem der Ansprüche 1 bis 3, **dadurch gekennzeichnet, dass** die Anschubbewegung des Schmiergerätes (2) mittels einer Beschleunigungseinrichtung, wie eines Beschleunigungszylinders (J) oder eines Stellmotors, ggf. gegen die Wirkung einer Rückstelleinrichtung, wie eines Rückfahrzylinders (A), erfolgt.

5. Schmiereinrichtung nach einem der vorhergehenden Ansprüche, **dadurch gekennzeichnet, dass** die Anschubgeschwindigkeit des Schmiergerätes (2), ggf. mittels eines Drosselrückschlagventils, einstellbar ist.

6. Schmiereinrichtung nach Anspruch 3 oder 4, **dadurch gekennzeichnet, dass** der Beschleunigungszylinder (J) drucklos wird, sobald der Schmierkopf (D) mit der Abgabe des Schmierstoffes beginnt.

7. Schmiereinrichtung nach einem der Ansprüche 3 bis 5, **dadurch gekennzeichnet, dass** bei dem Zurückfahren des Schmiergerätes (2) längs des Bandes (1) oder dgl. in die Ausgangsstellung der Beschleunigungszylinder (J) drucklos in seine Ausgangslage fahrbar ist.

8. Schmiereinrichtung nach einem der Ansprüche 3 bis 6, **dadurch gekennzeichnet, dass** die Rückfahrgeschwindigkeit des Schmiergerätes (2), ggf. mittels eines Drosselrückschlagventils (I) an dem Rückfahrzylinder (A), einstellbar ist.

9. Schmiereinrichtung nach einem der Ansprüche 3 bis 7, **dadurch gekennzeichnet, dass** der Gegendruck des Rückfahrzylinders (A) während der Anschubbewegung des Schmiergerätes (2) ca. 0,5 bar und der Rückfahrdruck des Rückfahrzylinders (A) während der Zurückbewegung des Schmiergerätes (2) längs des Bandes (1) oder dgl. ca. 6 bar beträgt.

10. Schmiereinrichtung nach einem der vorhergehenden Ansprüche, **dadurch gekennzeichnet, dass** das den Schmierkopf (D) aufweisende Schmier gerät (2) zusammen mit dem Mitnehmer (C), vorzugsweise mit dessen Hilfe, seitlich des Bandes (1) oder dgl. senkrecht zu diesem verfahrbar ist oder/und dass das Band (1) oder dgl., vorzugsweise mit Hilfe des Mitnehmers (C), quer zu der Längsrichtung der Schmierstellenbewegung in Richtung auf den Schmierkopf (D) bewegbar ist.

11. Schmiereinrichtung nach einem der vorhergehenden Ansprüche, **dadurch gekennzeichnet, dass** der Mitnehmer (C) einen Mitnehmerarm (5) aufweist, welcher, vorzugsweise von oben oder unten, in das Band (1), z. B. das Rollen- oder Kettenband (1), oder dgl., eingreift.

12. Schmiereinrichtung nach einem der vorhergehenden Ansprüche, **dadurch gekennzeichnet, dass** der Mitnehmerarm (5) an seinem äußeren Ende zum Übergreifen einer Rollen- oder Kettengliedachse (6) gabelförmig (7) gestaltet ist.

13. Schmiereinrichtung nach einem der vorhergehenden Ansprüche, **dadurch gekennzeichnet, dass** der Mitnehmerarm (5) in Bewegungsrichtung der Rollenoder Kettengliedachse (6) aus dessen Bewegungsweg heraus schwenkbar ist.

14. Schmiereinrichtung nach einem der vorhergehenden Ansprüche, **dadurch gekennzeichnet, dass** zwei in Längsrichtung des Bandes (11) oder dgl. im Abstand (X) zueinander angeordnete Sensoren (S4, S4') vorgesehen sind, deren Signale für die Erkennung von zwei in Längsrichtung des Bandes oder dgl. im Abstand (Z) zueinander angeordneten Schmierstellen herangezogen werden und dass für die Versorgung der beiden Schmierstellen wenigstens zwei in deren Abstand angeordnete Schmierköpfe (D, D') vorgesehen sind.

15. Schmiereinrichtung nach Anspruch 16, **dadurch gekennzeichnet, dass** der Abstand (X) der Sensoren (S4, S4') im Wesentlichen mit dem Abstand (Z) aufeinander folgender Schmierstellen des Bandes (11) oder dgl. übereinstimmt.

16. Schmiereinrichtung nach Anspruch 16 oder 17, **dadurch gekennzeichnet, dass** der Abstand (4) der Sensoren (S4, S4') und/oder der Schmierköpfe (D, D') voneinander einstellbar ist.

17. Schmiereinrichtung nach einem der vorhergehenden Ansprüche, **dadurch gekennzeichnet, dass** das Schmiergerät (2, 12) wenigstens zwei bezogen auf das Band (11) oder dgl. einander gegenüber liegende Schmierköpfe (D, D") aufweist, welche jeweils von ihrer Seite aus in Richtung auf die Schmierstellen des Bandes (11) synchron zu und von diesem weg bewegbar sind.

18. Schmiereinrichtung nach einem oder mehreren der Ansprüche 16 bis 19, insbesondere für das Abschmieren von Bändern (11) oder dgl. mit Doppeltragrollenpaaren (125) und Einzelrollenpaaren (124), **dadurch gekennzeichnet, dass** zwei Paare von Schmierköpfe (D, D"; D" D"') paarweise steuerbar sind.

19. Schmiereinrichtung nach einem oder mehreren der Ansprüche 16 bis 20, **dadurch gekennzeichnet, dass** die Schmierköpfe (D bis D"') gemeinsam auf einem Schlitten (F) angeordnet sind, welcher vorzugsweise auch den Mitnehmer (C) trägt.

20. Schmiereinrichtung nach einem oder mehreren der Ansprüche 16 bis 21, **dadurch gekennzeichnet, dass** die Schmierköpfe (D, D"; D, D"') paarweise spiegelbildlich zu dem Band (11) vorgesehen sind.

## Claims

1. Lubrication equipment for lubricating moving lubricating points, such as those on a conveyor belt (1), particularly on a roller or chain conveyor (1), comprising a lubrication unit (2), which is supported so that it can move to and fro in longitudinal direction of the movement of the lubricating points, and a catching device (C), which assumes a resting position and an engaged position relative to the conveyor belt (1) or like equipment having the lubricating points, in which case the conveyor belt (1) or the like carries along the catching device (C) in its engaged position and thus the lubrication unit (2) over a predetermined distance at the speed of the conveyor belt (1) or the like, over which distance a lubricating head (D) can be moved towards a lubricating point by lateral relative movement between conveyor belt (1) or the like and lubrication unit (2) and lubricant can be delivered to said lubricating point, and in which case at the end of said predetermined distance both the lubricating head (D) and the catching device (C) are moved relative to the conveyor belt (1) or the like back into their respective resting positions and the lubrication unit (2) can be returned along the conveyor belt (1) or the like into its starting position, **characterized in that**, prior to or simultaneously with engagement of the catching device (C) with the conveyor belt (1) or the like, the lubrication unit (2) can be boosted or advanced in longitudinal direction of the movement of the lubricating points at a boosting speed which is greater than zero and less than the speed of the conveyor belt (1) or the like.

2. Lubrication equipment according to Claim 1, **characterized in that** the boosting speed of the lubrication unit (2) is no more than a predetermined maximum difference, such as for instance 0.4 m/sec., less than the speed of the conveyor belt (1) or the like.

3. Lubrication equipment according to Claim 1 or 2, **characterized in that** the boosting speed of the lubrication unit (2) amounts to no more than a predetermined maximum value, such as for instance 0.4 m/sec.

4. Lubrication equipment according to one of Claims 1 to 3, **characterized in that** the boosting movement of the lubrication unit (2) is achieved by means of an acceleration device, such as an acceleration cylinder (J) or a servomotor, possibly against the action of a restoring device, such as a return cylinder (A).

5. Lubrication equipment according to one of the preceding claims, **characterized in that** the boosting speed of the lubrication unit (2) can be adjusted, possibly by means of a throttle check valve.

6. Lubrication equipment according to Claim 4 or 5, **characterized in that** the acceleration cylinder (J) becomes pressure-less as soon as the lubricating head (D) begins to deliver the lubricant.

7. Lubrication equipment according to one of Claims 4 to 6, **characterized in that,** upon the return of the lubrication unit (2) along the conveyor belt (1) or the like into the starting position, the acceleration cylinder (J) can move without pressure into its starting position.

8. Lubrication equipment according to one of Claims 4 to 7, **characterized in that** the return speed of the lubrication unit (2) is adjustable, possibly by means of a throttle check valve (I) on the return cylinder (A).

9. Lubrication equipment according to one of Claims 4 to 8, **characterized in that** the back pressure of the return cylinder (A) during the boosting movement of the lubrication unit (2) amounts to approximately 0.5 bar and the return pressure of the return cylinder (A) during the return movement of the lubrication unit (2) along the conveyor belt (1) or the like amounts to approximately 6 bar.

10. Lubrication equipment according to one of the preceding claims, **characterized in that** the lubrication unit (2) having the lubricating head (D), together with the catching device (C), and preferably with its help, can move at the side of the conveyor belt (1) or the like perpendicular to the latter **and/or in that** the conveyor belt (1) or the like, preferably with the help of the catching device (C), can move perpendicular to the longitudinal direction of the movement of the lubricating points towards the lubricating head (D).

11. Lubrication equipment according to one of the preceding claims, **characterized in that** the catching device (C) has a catching arm (5), which engages, preferably from above or below, in the conveyor belt (1), for example the roller or chain conveyor (1) or the like.

12. Lubrication equipment according to one of the preceding claims, **characterized in that** the catching arm (5) is designed in the shape of a fork (7) at its outer end so as to engage over a roller axle or chain link axle (6).

13. Lubrication equipment according to one of the preceding claims, **characterized in that** the catching arm (5) in the direction of movement of the roller axle or chain link axle (6) can be swivelled out of its path of movement.

14. Lubrication equipment according to one of the preceding claims, **characterized in that** two sensors (S4, S4') are provided which are disposed at a distance (X) from one another in longitudinal direction of the conveyor belt (11) or the like, their signals being utilized for the identification of two lubricating points disposed at a distance (Z) from one another in longitudinal direction of the conveyor belt or the like, **and in that** at least two lubricating heads (D, D') are provided disposed the same distance apart for supplying the two lubricating points.

15. Lubrication equipment according to Claim 14, **characterized in that** the distance (X) between the sensors (S4, S4') substantially agrees with the distance (Z) between successive lubricating points of the conveyor belt (11) or the like.

16. Lubrication equipment according to Claim 14 or 15, **characterized in that** the distance (X) between sensors (S4, S4') and/or between lubricating heads (D, D') is adjustable.

17. Lubrication equipment according to one of the preceding claims, **characterized in that** the lubrication unit (2, 12) has at least two lubricating heads (D, D"), which lie opposite one another relative to the conveyor belt (11) or the like and can be moved from their respective sides towards the lubricating points of the conveyor belt (11) synchronously towards and away from this.

18. Lubrication equipment according to Claim 17, in particular for lubricating conveyor belts (11) or the like which have pairs of double support rollers (125) and pairs of single rollers (124), **characterized in that** two pairs of lubricating heads (D, D"; D', D"') can be controlled in pairs.

19. Lubrication equipment according to Claim 17 or 18, **characterized in that** the lubricating heads (D to D"') are disposed together on a sliding carriage (F), which preferably also carries the catching device (C).

20. Lubrication equipment according to Claims 17 to 19, **characterized in that** the lubricating heads (D, D"; D', D"') are provided in pairs in such a way as to be the mirror image of one another relative to the conveyor belt (11).

## Revendications

1. Dispositif de lubrification pour la lubrification de points de lubrification mobiles, par exemple sur une bande (1 ), notamment sur une bande à rouleaux ou à chaînes (1), lequel dispositif est muni d'un appareil de lubrification (2) qui est monté de manière à pouvoir effectuer des mouvements de va-et-vient le long du trajet de déplacement des points de lubrification, lequel appareil de lubrification (2) présente un élément d'entraînement (C) ayant une position de repos et une position d'entraînement par rapport à la bande (1) ou du dispositif similaire, la bande (1) ou le dispositif similaire entraînant l'entraîneur (C) se trouvant dans la position d'entraînement et avec lui l'appareil de lubrification (2) sur un trajet prédéterminé à la vitesse de la bande (1) ou du dispositif similaire, sur lequel trajet une tête de lubrification (D) peut être rapprochée par un mouvement relatif latéral entre la bande (1) ou le dispositif similaire et l'appareil de lubrification (2) au point de lubrification et du lubrifiant peut être mis le point de lubrification et à la fin dudit trajet aussi bien la tête de lubrification (D) que l'élément d'entraînement (C) sont ramenés dans leur position de repos respective par rapport à la bande (1) ou au dispositif similaire et l'appareil de lubrification (2) peut reculer le long de la bande (1) dans sa position de repos, **caractérisé en ce que** avant ou en même temps que la mise en prise de l'entraîneur (C) sur la bande (1) ou le dispositif similaire, l'appareil de lubrification (2) peut être propulsé le long du trajet de déplacement des points de lubrification à une vitesse de propulsion qui est supérieure à zéro et inférieure à la vitesse de la bande (1) ou du dispositif similaire.

2. Dispositif de lubrification selon la revendication 1, **caractérisé en ce que** la vitesse de propulsion de l'appareil de lubrification (2) est inférieure tout au plus d'une différence maximale prédéterminée, comme par exemple 0,4 m/s, à la vitesse de la bande (1) ou du dispositif similaire.

3. Dispositif de lubrification selon la revendication 1 ou la revendication 2, **caractérisé en ce que** la vitesse de propulsion de l'appareil de lubrification (2) ne dépasse pas une valeur maximale prédéterminée, comme par exemple 0,4 m/s.

4. Dispositif de lubrification selon l'une des revendications 1 à 3, **caractérisé en ce que** le mouvement de propulsion de l'appareil de lubrification (2) est appliqué, le cas échéant contre l'effet d'un dispositif de rappel, par exemple d'un cylindre de rappel (A), au moyen d'un dispositif d'accélération, par exemple d'un cylindre d'accélération (J) ou d'un moteur réglable.

5. Dispositif de lubrification selon l'une des revendications précédentes, **caractérisé en ce que** la vitesse de propulsion du dispositif de lubrification (2) est réglable, le cas échéant au moyen d'une soupape de retenue à étranglement.

6. Dispositif de lubrification selon la revendication 4 ou 5, **caractérisé en ce que** le cylindre d'accélération (J) n'est plus sous pression dès que la tête de lubrification (D) commence à distribuer du lubrifiant.

7. Dispositif de lubrification selon l'une des revendications 4 à 6, **caractérisé en ce que** le cylindre d'accélération (J) peut être ramené dans sa position de départ sans être sous pression lors du recul dans la position de départ de l'appareil de lubrification (2) le long de la bande (1) ou du dispositif similaire.

8. Dispositif de lubrification selon l'une des revendications 4 à 7, **caractérisé en ce que** la vitesse de recul de l'appareil de lubrification (2) peut être réglée, le cas échéant au moyen d'une soupape de retenue à étranglement (1) disposée sur le cylindre de rappel (A).

9. Dispositif de lubrification selon l'une des revendications 4 à 8, **caractérisé en ce que** la contre-pression du cylindre de rappel (A) durant le mouvement de propulsion de l'appareil de lubrification (2) s'élève à environ 0,5 bar et la pression de recul du cylindre de recul (A) durant le mouvement de recul de l'appareil de lubrification (2) le long de la bande (1) ou du dispositif similaire s'élève à environ 6 bars.

10. Dispositif de lubrification selon l'une des revendications précédentes, **caractérisé en ce que** l'appareil de lubrification (2) muni de la tête de lubrification (D) peut être déplacée avec l'entraîneur (C), de préférence avec son aide, sur le côté de la bande (1) ou du dispositif similaire perpendiculairement à cette dernière, ou / et **en ce que** la bande (1) ou le dispositif similaire peut être déplacé en direction de la tête de lubrification (D) perpendiculairement à la direction du mouvement des points de lubrification, de préférence à l'aide de l'entraîneur (C).

11. Dispositif de lubrification selon l'une des revendications précédentes, **caractérisé en ce que** l'entraîneur (C) est muni d'un bras d'entraînement (5) qui s'engage de préférence du haut ou du bas dans la bande (1), par exemple la bande à rouleaux ou à chaîne, ou le dispositif similaire.

12. Dispositif de lubrification selon l'une des revendications précédentes, **caractérisé en ce que** le bras d'entraînement (5) à son extrémité extérieure destinée à saisir par le haut l'axe d'un rouleau ou d'un chaînon (6), a la forme d'une fourche (7).

13. Dispositif de lubrification selon l'une des revendications précédentes, **caractérisé en ce que** le bras d'entraînement (5) peut basculer dans la direction de déplacement de l'axe du rouleau ou du chaînon (6) en sortant de son chemin de déplacement.

14. Dispositif de lubrification selon l'une des revendications précédentes, **caractérisé en ce que** deux capteurs (S4, S4') sont prévus disposés à une distance (X) l'un de l'autre le long de la bande (11) ou du dispositif similaire, dont les signaux sont utilisés pour la reconnaissance de deux points de lubrification disposés le long de la bande ou du dispositif similaire à une distance (Z) l'un de l'autre, et **en ce que** deux têtes de lubrification (D, D') sont prévues pour l'alimentation des deux points de lubrification, disposées à la même distance.

15. Dispositif de lubrification selon la revendication 14, **caractérisé en ce que** la distance (X) séparant les capteurs (S4, S4') coïncide essentiellement avec la distance (Z) séparant deux points de lubrification successifs de la bande (11 ) ou du dispositif similaire.

16. Dispositif de lubrification selon la revendication 14 ou 15, **caractérisé en ce que** la distance (X) séparant les capteurs (S4, S4') et / ou les têtes de lubrification (D, D') peut être réglée l'un par rapport à l'autre.

17. Dispositif de lubrification selon l'une des revendications précédentes, **caractérisé en ce que** l'appareil de lubrification (2, 12) est muni d'au moins deux têtes de lubrification (D, D") situées l'une en face de l'autre par rapport à la bande (11) ou le dispositif similaire, qui peuvent être chacune rapprochées ou éloignées de façon synchrone de son côté en direction des points de lubrification de la bande (11).

18. Dispositif de lubrification selon la revendication 17, notamment pour lubrifier des bandes (11) ou des dispositifs similaires avec des paires de rouleaux porteurs doubles (125) et des paires de rouleaux porteurs simples (124), **caractérisé en ce que** deux paires de têtes de lubrification (D, D" ; D', D"') peuvent être commandées par paire.

19. Dispositif de lubrification selon l'une des revendications 17 ou 18, **caractérisé en ce que** les têtes de lubrification (D à D"') sont disposées ensemble sur un chariot (F) qui porte de préférence également l'entraîneur (C).

20. Dispositif de lubrification selon l'une des revendications 17 à 19, **caractérisé en ce que** les têtes de lubrification (D, D" ; D', D"') sont disposées deux à deux selon un miroir par rapport à la bande (11).
